Europäisches Patentamt

European Patent Office — Publication number: **0 326 214**

Office européen des brevets — **A1**

# EUROPEAN PATENT APPLICATION

(21) Application number: 89200121.5

(22) Date of filing: 20.01.89

(51) Int. Cl.4: **B23Q 3/154**

(30) Priority: 22.01.88 NL 8800143

(43) Date of publication of application:
02.08.89 Bulletin 89/31

(84) Designated Contracting States:
AT BE CH DE ES FR GB GR IT LI LU NL SE

(71) Applicant: Walker-Hagou B.V.
Industrieweg 9
NL-5531 AD Bladel(NL)

(72) Inventor: Bijl, Roy
Hobbel 8
NL-5561 TM Riethoven(NL)
Inventor: Luyten, Cornelis Theodorus Petrus
Maria
Kastenplein 147
NL-5653 LT Eindhoven(NL)

(74) Representative: de Vries, Johannes Hendrik
Fokke et al
Octrooibureau Los en Stigter B.V. P.O. Box
20052
NL-1000 HB Amsterdam(NL)

(54) Method and apparatus for manufacturing a magnetic chuck.

(57) A method and apparatus are provided for manufacturing an element (1) of a magnetic chuck comprising pole parts (2) of soft magnetizable material and parts (3) of a nonmagnetizable material connected thereto. The method implies that the parts (3) of the non-magnetizable material are casted on to the pole parts (2) of soft magnetizable material. In case of the manufacture of a permanent magnetic chuck cavities (18) are saved between the pole parts (2) during casting. For this purpose the apparatus comprises a mould (10) having ribs (20) therein for forming said cavities (8), the ribs (20) also acting as spacer means for holding the pole parts (2) in a spaced apart relationship during casting. The resulting element (1) of a magnetic chuck has a strong and rigid structure and is less costly to produce than the prior art chucks.

EP 0 326 214 A1

## Method and apparatus for manufacturing a magnetic chuck

The invention relates to a method of manufacturing an element of a magnetic chuck comprising pole parts of soft magnetizable material and parts of a non-magnetizable material connected thereto.

In a well-known method of this type the basic strip of non-magnetizable material, such as brass, is first of all machined by milling such that the pole parts of steel fit into the basic strip and are positioned in place. Thereafter, the parts of non-magnetizable material are clamped between the pole parts. Than soldering paste is smeared on to the resulting work piece and the brass parts are brazed to the steel pole parts in a furnace by means of solder. Finally, the soldering paste is removed in a bath.

This known method has a number of important disadvantages.

First of all, the method is expensive as a consequence of machining the basic strip by milling and using expensive solder for connecting the brass and steel parts. Further, the steel pole parts should be prepared carefully prior to the soldering operation, otherwise there will be no proper soldered joint. This also makes the method expensive. Furthermore, the soldering operation causes the exterior of the element to be affected after some time because in many cases soldering paste remains in the gaps between the parts and this soldering paste comes to the surface and causes a discouloring of the brass parts in course of time.

It is an object of the invention to provide a method of the type mentioned in the preamble, which removes said disadvantages in an effective way.

For this purpose the method according to the invention is characterized in that the parts of the material having the lowest melting point are casted in a casting mould to the parts of the material having a higher melting point.

This method can be carried out in a much cheaper way compared to the known method. It is true that a relatively expensive mould is required, but with larger numbers of chucks the costs for each are low. Preferably, a die-casting process is used resulting in a very high quality product.

The casting method according to the invention is substantially less critical regarding the surface quality of the parts of the material having the higher melting point and further provides for a large degree of freedom in shaping so that the element can be given a optimal strength and stiffness by choosing a suited shape.

Preferably, the parts of the non-magnetizable material are casted on to the pole parts of soft magnetizable material, while a copper or aluminium alloy is used as non-magnetizable material and steel is used as soft magnetizable material.

These materials have good magnetic or insulating properties, respectively and have a relatively high strength, while the copper or aluminium alloys, such as brass, are well-castable, in particular by means of die-casting. Of course also other magnetizable or non-magnetizable materials can be used. The non-magnetizable material, for instance, may consist of a suited plastic material having the required properties.

In an embodiment of the method, wherein the element is provided with a plurality of regularly spaced apart pole parts, the pole parts are held in a spaced apart relationship during casting when the non-magnetizable material is casted between the pole parts.

In case there is manufactured an element for a permanent magnetic chuck, it is possible that, prior to casting the non-magnetizable material, pole parts of hard magnetizable material are positioned in place.

Furthermore, it is an advantage that the non-magnetizable material has a higher thermal coefficient of expansion than the pole parts, the non-magnetizable material being casted to the pole parts in such a way that the parts of the non-magnetizable material between the pole parts are connected to each other.

These measurements will result in a shrunk connection between the parts of the non-magnetizable material and the pole parts when the element is cooled after the non-magnetizable material has been casted. By making the proper choice of the materials and the configuration and position of the connections between the parts of the non-magnetizable material a very strong shrunk connection can be effected which results in a very rigid element.

The invention further relates to an apparatus for manufacturing an element of a magnetic chuck by using the method discribed hereinbefore, the element of the chuck being provided with pole parts of soft magnetizable material and parts of a non-magnetizable material connected thereto.

According to the invention this apparatus is characterized by a casting mould for casting the parts of the material having the lowest melting point to the parts of the material having a higher melting point, the casting mould comprising means for positioning the latter parts with respect to each other and with respect to the casting mould.

The invention also includes an element of a magnetic chuck manufactured according to the method described hereinabove.

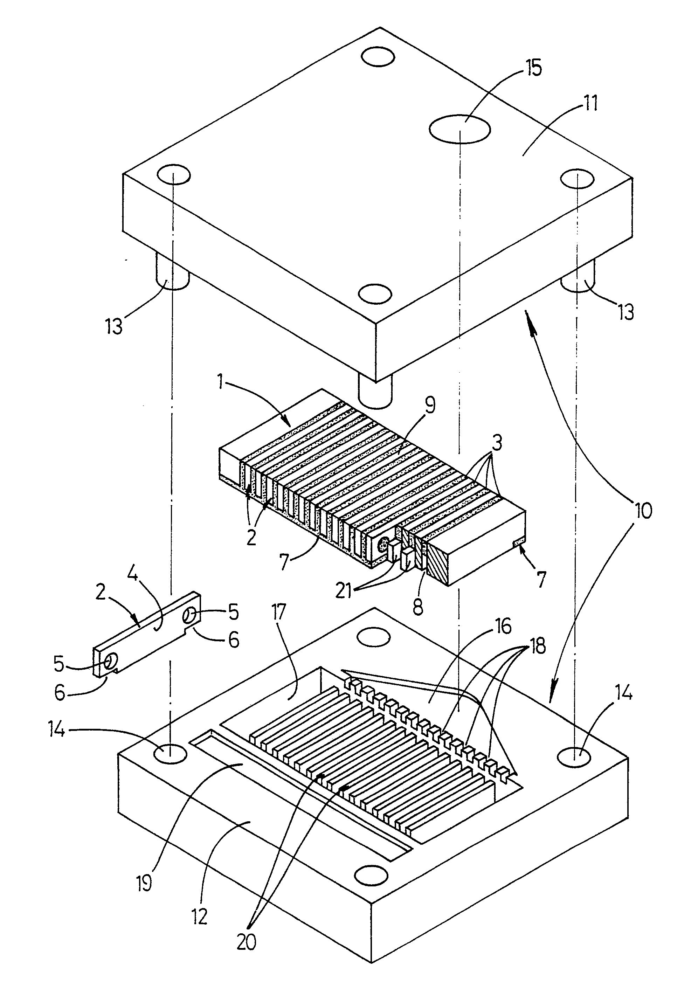

The invention will hereafter be elucidated with reference to the drawing in which the only figure shows a schematic perspective view of an apparatus for performing the method of manufacturing a magnetic chuck by way of example.

The embodiment shown in the drawing by way of example concerns a chuck using permanent magnets for producing a magnetic holding force. The drawing shows the upper part of said chuck, the so-called top plate 1 which can be manufactured in the apparatus. It is also possible with the method according to the invention to make the lower part of the chuck, the so-called inner system.

Furthermore there can be manufactured in a corresponding way an auxiliary device of the chuck, that is the laminated work holding block for magnetically holding products which are difficult to hold as a result of their geometry.

The top plate 1 is constructed of a plurality of parallel regularly spaced apart pole parts 2 of soft magnetizable material, such as for instance st 37, the pole parts 2 being formed as strips between which parts 3 of non-magnetizable material, such as brass, are provided. Of course it is possible to use other materials having the required properties, such as for example a plastic material replacing the brass.

The pole parts 2 are provided on their sides 4 facing each other with recesses extending along the entire thickness thereof, in the embodiment shown by way of example the recesses consisting of two holes 5 formed near the ends of the pole parts 2 and two notches 6 adjacent the ends and the lower side thereof. These holes 5 and notches 6 serve for passing the non-magnetizable material through the pole parts 2 and consequently for connecting the pole parts 2 together, as will be explained more detailed further on. The strip 7 of non-magnetizable material formed by means of the notches 6 serves also for placing the top plate 1 in a magnetically insulated manner into a housing (not shown) which, for instance, can be made of cast iron. In this way of mounting, the top plate 1 is supported on parts of the housing.

In the parts 3 of non-magnetizable material cavities 8 between the pole parts 2 are left open for inserting magnets 21. These magnets 21, together with the magnets of the inner system of the chuck, produce the magnetic force holding a work piece on the upper surface 9 of the top plate 1. The remaining structure and the operation of the complete chuck are conventional and are assumed to be well known.

The apparatus for manufacturing the top plate 1 comprises a casting mould 10 having an upper mould part 11 and a lower mould part 12, one fitting into the other by means of positioning pins 13 and positioning recesses 14. The upper mould part comprises a delivery opening 15 connecting to a distribution space 16 in the lower mould part 14 communicating with a mould cavity 17 through inlet openings 18 spaced along the length of the mould cavity 17.

On the side of the mould cavity 17 oppositely to the inlet openings 19 a rise chamber 19 communicates with the mould cavity 17 by means of passages in the upper mould part 13 (not shown).

In the mould cavity 17 there is provided a plurality of parallel spaced ribs 19. Said ribs serve as positioning means for positioning the pole parts 2 in the mould cavity 17. For this purpose the distance between adjacent ribs 19 is such that the pole parts 2 are able to be clamped between the adjacent ribs 19. Furthermore, the ribs 19 serve for forming the cavities 8 in the top plate 1 since the cast material is obstructed by the ribs 19 so that at the location of the ribs 19 cavities 8 remain in the top plate 1.

The method of manufacturing the top plate 1 is as follows.

First of all, when the casting mould 10 is opened, the pole parts 2 are positioned between the ribs 19 in the mould cavity 17 of the lower mould part 12. Thereupon, the casting mould 10 is closed by placing mould part 11 on to mould part 12. Then the non-magnetizable material, in this case brass, is die-casted under high pressure into the mould cavity 17 through the delivery opening 15, distribution space 16 and inlet openings 18.

When the brass is solidified, the casting mould 10 is opened again and the top plate 1 is urged out of the lower mould part 12 of the casting mould 10 by means of ejector pegs (not shown). Upon a further cooling of the top plate 1 the pole parts 2 will be clamped between the brass parts 3 with a very high shrinkage force as a consequence of the shrinkage of the brass which is larger than that of the steel of the pole parts 2 and as a consequence of the fact that the brass extends through the holes 5 and the notches 6 in the pole parts 2, thereby effecting a very strong connection. In this way a very rigid and strong integrated part is formed.

After complete cooling down of the top plate 1 the magnets 21 are inserted into the cavities 8. Herein, it is possible that the magnets 21 are seated in the cavities 8 with a sliding fit.

The exterior faces of the top plate 1 and in particular the upper surface 9, are finished in order to obtain a smooth and flush outer side. The lower side of the top plate 1 can be coated with a plastic material which is applied in a liquid form and serves for finishing and for locking the magnets 21 in the cavities 8.

In the method according to the invention it is also possible to place magnets of hard magnetic material between the pole parts 2 prior to casting the non-magnetizable material so that after the casting operation it is only necessary to finish the top plate 1.

According to the invention there is provided a method of manufacturing a magnetic chuck, which can be performed in a very cheap way and which permits a very large freedom in designing, thereby enabling that the elements of the chuck are optimized with respect to strength, rigidity and appearance without high additional costs.

The invention is not restricted to the embodiments shown in the drawing and described hereinbefore, which can be varied in different ways within the scope of the appended claims. For example, it should be understood that the invention also includes the manufacture of rotary magnetic chucks having parallel or radial pole parts. The magnetic chucks may be of the permanent magnetic type, or the electro-magnetic type.

The permanent magnets preferably are artificial magnets, such as steel magnets, for example iron alloys known as Alnico, Alcomax and Ticonal, or ceramic magnets, such as Barium-Ferrite, sintered at high temperatures.

**Claims**

1. Method of manufacturing an element (1) of a magnetic chuck comprising pole parts (2) of soft magnetizable material and parts (3) of a non-magnetizable material connected thereto, **characterized** in that the parts (2; 3) of the material having the lowest melting point are casted in a casting mould (10) to the parts (3; 2) of the material having a higher melting point.

2. Method according to claim 1, wherein the parts (3) of the non-magnetizable material are casted on to the pole parts (2) of soft magnetizable material.

3. Method according to claim 2, wherein a copper or aluminium alloy is used as non-magnetizable material and steel is used as soft magnetizable material.

4. Method according to one of the preceding claims, wherein a die-casting process is used.

5. Method according to one of the preceding claims, wherein the element (1) is provided with a plurality of regularly spaced pole parts (2), and wherein the pole parts are held in a spaced apart relationship during casting when the non-magnetizable material (3) is casted between the pole parts (2).

6. Method according to claim 5, wherein the non-magnetizable material has a higher thermal coefficient of expansion than the pole parts (2), the non-magnetizable material being casted to the pole parts (2) in such a way that the parts of the non-magnetizable material between the pole parts (2) are connected to each other.

7. Method according to one of the preceding claims, wherein the pole parts (2) are provided on their surfaces facing each other with recesses (5, 6) extending through the entire thickness thereof and being filled by non-magnetizable material.

8. Method according to one claims 5-7, wherein the element (1) is provided with permanent magnets (21), and wherein the pole parts (2) are spaced apart by spacer means (20) during casting, and after removal of the casting from the casting mould the cavities (8) caused by the spacer means (20) are filled with magnets (21).

9. Method according to one of claims 5-7, wherein the element (1) is provided with permanent magnets, and wherein the permanent magnets of hard magnetizable material and the pole parts (2) of soft magnetizable material are positioned in the casting mould (10), whereupon the non-magnetizable material is casted into the casting mould (10).

10. Method of manufacturing an element (1) of a magnetic chuck, comprising the steps of providing a plurality of pole parts (2) of soft magnetizable material; positioning the pole parts (2) in a regularly spaced relationship between spacer means (20) of a casting mould (10), the spacer means (20) holding the pole parts (2) in position; die-casting the non-magnetizable material into the closed casting mould (10), the non-magnetizable material having a lower melting point than the soft magnetizable material of the pole parts (2) permitting the non-magnetizable material to be casted between the pole parts (2) and to be connected to the pole parts (2) due to solidification; removing the casting including the pole parts (2) and non-magnetizable material (3) from the casting mould (10); and placing permanent magnets (21) into cavities (8) formed during die-casting due to the spacer means (20) between the pole parts (2).

11. Apparatus for manufacturing an element (1) of a magnetic chuck, using the method of one of the preceding claims, which element (1) is provided with pole parts (2) of soft magnetizable material and parts (3) of a non-magnetizable material connected thereto, **characterized** by a casting mould (10) for casting the parts (2; 3) of the material having the lowest melting point to the parts (3; 2) of the material having a higher melting point, the casting mould (10) comprising means (20) for positioning the latter parts (3; 2) with respect to each other and with respect to the casting mould (10).

12. Element of a magnetic chuck manufactured by the method according to one of claims 1-9.

13. Magnetic chuck comprising the element according to claim 12.

14. Element for a magnetic chuck, comprising a plurality of pole parts (2) of soft magnetizable material arranged in a regularly spaced relationship, parts (3) of non-magnetizable material casted between the pole parts (2) and integrally connected to each other through the pole parts (2), permanent magnets (21) inserted into cavities (8) between the pole parts (2), which are formed during casting of the non-magnetizable material.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3296571 (J.T.FISHER)<br>* column 2, line 55 - column 4, line 29 * | 1-3, 5 | B23Q3/154 |
| A | | 6, 7,<br>10-14 | |
| A | US-A-4616796 (INOUE-JAPAX RESEARCH INC.)<br>* column 6, line 1 - line 6 *<br>--- | 4, 9 | |
| A | GB-A-904055 (J.ROBERT PANTON)<br>--- | | |
| A | FR-A-1404668 (P.M.BRAILLON)<br>----- | | |

TECHNICAL FIELDS
SEARCHED (Int. Cl.4)

B23Q

The present search report has been drawn up for all claims

| Place of search | Date of completion of the search | Examiner |
|---|---|---|
| THE HAGUE | 18 APRIL 1989 | VANHULLE R. |